# EUROPÄISCHE PATENTSCHRIFT

(11) **EP 3 671 311 B1**
(45) Veröffentlichungstag und Bekanntmachung des Hinweises auf die Patenterteilung: **07.12.2022**
(21) Anmeldenummer: 19000506.6
(22) Anmeldetag: 07.11.2019
(51) Int. Cl.: G02B 21/34

(54) **HALTERUNG FÜR OBJEKTTRÄGER UND ABDECKPLATTE ZUR AUFNAHME VON OBJEKTEN FÜR DIE UNTERSUCHUNG MIT HILFE DER MIKROSKOPIE**
BRACKET FOR OBJECT HOLDER AND COVER PLATE FOR RECEIVING OBJECTS FOR EXAMINATION USING MICROSCOPY
DISPOSITIF DE RETENUE POUR UN SUPPORT D'OBJET ET PLAQUE DE COUVERTURE PERMETTANT DE RECEVOIR DES OBJETS POUR L'ANALYSE À L'AIDE DU MICROSCOPIE

(30) Priorität: 18.12.2018 DE 102018009799
(43) Veröffentlichungstag der Anmeldung: 24.06.2020
(73) Patentinhaber: Forschungszentrum Jülich GmbH, 52425 Jülich (DE)
(72) Erfinder: Weckbecker, Marcel, 50354 Hürth (DE); Nork, René, 52353 Düren (DE)

(56) Entgegenhaltungen:
- DE-A1- 10 248 302
- US-A- 6 020 995
- US-A1- 2004 101 439
- US-A1- 2012 237 939
- US-A1- 2013 050 692

## Beschreibung

Die Erfindung betrifft eine Halterung für Objektträger und Abdeckplatte zur Aufnahme von Objekten für die Untersuchung mit Hilfe der Mikroskopie.

### Stand der Technik

Ein wesentliches Hilfsmittel für die Untersuchung von Objekten im Bereich der Mikroskopie sind Träger, auf die das zu untersuchende Objekt positioniert wird. Auf diese üblicherweise rechteckigen Glasplatten, auch Objektträger genannt, wird das Objekt positioniert - und meist in eine Lösung, meistens Wasser oder auch Immersionsöl gelegt und dann beispielsweise mit einer weiteren transparenten Abdeckplatte, üblicherweise Deckglas, abgeschlossen. Der so vorbereitete Träger/Objektträger wird dann üblicherweise beim Mikroskopieren auf dem Objekttisch des Mikroskops mit Klemmhaltern befestigt. Die Abdeckplatte soll dazu dienen, dass das Objekt, welches untersucht werden soll, nicht austrocknet. Außerdem soll die Abdeckplatte dafür sorgen, dass das Licht gleichmäßig aus dem Objekt austritt und in das Objektiv des Mikroskops eintritt.

Handelsübliche Objektträger werden überwiegend fast immer in einer Größe 76 x 26 mm hergestellt und vertrieben. Die Stärke des Glases beträgt zwischen 1 und 1,5 Millimeter. Eine Abdeckplatte bzw. Deckglas ist in der Regel quadratisch (1,8 x 1,8 cm) und ca. 100 - 200 Mikrometer dick.

Ein häufiges Problem bei der Verwendung von Abdeckplatten auf Objektträgern ist, dass diese dünnen Abdeckplatten durch die Bewegung des Objektivs des Mikroskops, bei der Einstellung der gewünschten Vergrößerung und Tiefenschärfe, zerdrückt werden. Weiterhin kann es bei der Untersuchung von größeren und dickeren Objekten dazu kommen, dass ein großer Zwischenraum zwischen Abdeckplatte und Objektträger verbleibt, so dass dieser Zwischenraum nicht gleichmäßig und vollständig mit Flüssigkeit oder Reaktionslösung gefüllt werden kann. Ein System, bei dem zwei Objektträger mittels eines Abstandshalters in einem definierten Abstand und von Klammern zusammengehalten werden, ist aus US 2012/237939 A1 bekannt.

### Aufgabe und Lösung

Die Aufgabe der Erfindung ist es daher, eine Halterung für Träger in der Mikroskopie, insbesondere Lichtmikroskopie, bereit zu stellen, mit der es möglich wird, den Zwischenraum zwischen Objektträger und Abdeckplatte je nach Anwendungsbedarf frei einstellen und wählen zu können sowie eine mechanische Zerstörung der Abdeckplatte durch Eindrücken zu vermindern. Es ist weiterhin Aufgabe der Erfindung, eine Halterung für Träger in der Lichtmikroskopie bereitzustellen, mit der es möglich wird, dass nach Aufbringen des Objekts zwischen Objektträger und Abdeckplatte Öffnungen des Zwischenraums zwischen Objektträger und Abdeckplatte komplett verschlossen werden können, so dass eine geschlossene, rahmenartige Halterung entsteht, die die Bereitstellung eines geschlossenen Beobachtungssystems oder Reaktionsraums für das Objekt ermöglicht.

Die Aufgaben der Erfindung werden gelöst durch eine Halterung mit den Merkmalen des Hauptanspruchs. Vorteilhafte Ausgestaltungen der Vorrichtung finden sich in den jeweils darauf rückbezogenen Ansprüchen wieder.

### Gegenstand der Erfindung

Gegenstand der Erfindung ist eine Halterung für wenigstens einen Objektträger und eine Abdeckplatte zur Aufnahme von Objekten für die Untersuchung mit Hilfe der Mikroskopie, insbesondere der Lichtmikroskopie, umfassend wenigstens zwei sich gegenüberliegende Schienen zur Aufnahme jeweils wenigstens eines Objektträgers und jeweils wenigstens einer Abdeckplatte, wobei jede Schiene wenigstens zwei Aussparungen mit jeweils einem U-förmigen Querschnitt aufweist, die sich lateral entlang der Längsseite der jeweiligen Schiene erstrecken, wobei jeweils eine Aussparung der beiden Schienen eine Höhe H1 aufweist, die der Dicke des jeweils aufzunehmenden Objektträgers entspricht und jeweils eine Aussparung der beiden Schienen eine Höhe H2 aufweist, die der Dicke der jeweils aufzunehmenden Abdeckplatte oder eines weiteren Objektträgers entspricht, wobei die zwei Aussparungen der Schienen einen Abstand A zueinander aufweisen, der entweder wenigstens der Höhe des aufzunehmenden Objekts entspricht oder unterhalb der Höhe des aufzunehmenden Objekts liegt.

Die erfindungsgemäßen Schienen dienen der Aufnahme wenigstens eines Objektträgers und einer Abdeckplatte, wobei die Abdeckplatte beispielsweise ein weiterer Objektträger oder ein Deckgläschen sein kann. Diese Schienen können beispielsweise aus einem Kunststoffmaterial gefertigt sein. Aber auch andere Materialien wie z. B. Keramik, Metalle, gummiartige Materialien, Kunstwachse oder Silikone sind geeignet. Vorzugsweise sollte das Material chemisch inert sein und im Hinblick auf die Herstellung, aus einem einfach zu bearbeitenden und kostengünstigen Material bestehen.

Jede der beiden Schienen der Halterung weist wenigstens zwei übereinander angeordnete Aussparungen mit jeweils einem U-förmigen Querschnitt auf, in die jeweils der Objektträger und darüber die Abdeckplatte oder ein weiterer Objektträger hineingeschoben werden. Eine der Aussparungen der Schiene sollte wenigstens eine Höhe H1 aufweisen, die der Dicke des Objektträgers entspricht. Die zweite Aussparung der Schiene sollte wenigstens eine Höhe H2 aufweisen, die der Dicke der Abdeckplatte oder beispielsweise des weiteren Objektträgers entspricht. Der Objektträger und die Abdeckplatte sollten in den Schienen so angeordnet sein, dass sie passgenau in die jeweiligen Aussparungen eingeführt werden können, so dass es nicht zum Verrutschen dieses Objektträgers bzw. der Abdeckplatte in den Schienen kommt. Dazu sollte die Höhe H1 und H2 der Aussparungen in einer bevorzugten Ausführung genau der Dicke der jeweils verwendeten Objektträger bzw. Abdeckplatte entsprechen. Für die Verwendung von handelsüblichen Objektträgern mit einer Stärke der Objektträgerplatte zwischen 0,8 bis 1,5 mm sind dann beispielsweise Höhen H1 im Bereich von wenigstens 0,8 bis 1,5 mm geeignet. Für die Abdeckplatte, für die auch ein Objektträger eingesetzt werden kann, sind dann Höhen H2 ebenfalls im Bereich von wenigstens 0,8 bis 1,5 mm geeignet.

Für eine bruchsichere Halterung und Aufnahme der Objektträger und/oder Abdeckplatten sollten die Schienen vorzugsweise eine Länge aufweisen, die wenigstens einer Seitenlänge des Objektträgers oder der Abdeckplatte entspricht. In einer besonders bevorzugten Ausführung der Halterung sollte jeweils die kleinere Seitenlänge der Objektträgerplatte oder Abdeckplatte für die Bestimmung der Länge der Schienen gewählt werden. Die Aussparungen sollten sich in einer bevorzugten Ausführung lateral entlang der kompletten Längsseite der Schienen erstrecken. Dies ermöglicht zum einen, dass die Objektträger und Abdeckplatte von beiden Seiten seitlich in die Schiene eingeschoben werden kann und zum anderen ermöglicht sie eine stabile Halterung der Platten über die Gesamtlänge der Schiene. Die Aussparungen sollten eine Tiefe T aufweisen, die eine stabile und bruchsichere Aufnahme des Objektträgers bzw. der Abdeckplatte gewährleistet. Die Tiefe T der Aussparung kann dabei vorteilhaft zwischen 1/10-tel bis 1/5-tel der Seitenlänge des Objektträgers bzw. der Abdeckplatte aufweisen, wobei hier die Seitenlänge der jeweils längeren Seite des Objektträgers bzw. der Abdeckplatte gemeint ist.

Vorzugsweise sollten beide Schienen eine identische geometrische Ausgestaltung aufweisen.

Die beiden Aussparungen erstrecken sich lateral entlang der Längsseite der Schiene und haben einen U-förmigen Querschnitt. Beide Aussparungen sind übereinander angeordnet, so dass beispielsweise in die untere Aussparung der Objektträger und in die darüber angeordnete Aussparung die Abdeckplatte oder der weitere Objektträger angeordnet werden kann. Der Objektträger der Halterung, auf den das zu beobachtende Objekt aufgebracht wird, sollte vorzugsweise in die Aussparung eingeschoben werden, die zur Objekttischseite ausgerichtet ist. Die Abdeckplatte oder der zweite Objektträger, die über dem unteren Objektträger angeordnet ist, sollte in die Aussparung eingeschoben werden, die in Richtung Objektiv ausgerichtet ist.

Dadurch, dass die Aussparungen sich in einer vorteilhaften Ausgestaltung entlang der kompletten Längsseite der Schiene erstrecken, können die Objektträger/Abdeckplatten seitlich in die Aussparung der Schiene hereingeschoben werden. Die Schienen sind bei der Halterung so angeordnet, dass sie sich gegenüberliegen.

Die beiden Aussparungen der jeweiligen Schiene haben einen Abstand A zueinander, der mindestens der Höhe des aufzunehmenden Objekts entsprechen sollte. Sollte diese Höhe unterschritten werden, kann es nachteilig dazu kommen, dass das Objekt, welches zwischen Objektträger und Abdeckplatte angeordnet wird, bei einem Abstand von Objektträger und Abdeckplatte der geringer ist, als die Höhe des Objekts, dass das Objekt zwischen Objektträger und Abdeckplatte zerdrückt wird und damit eine unverfälschte Beobachtung des Objekts unter dem Mikroskop nicht möglich wird. In speziellen Anwendungsfällen kann es jedoch wünschenswert sein, dass das Objekt in einem zerdrückten Zustand beobachtet werden soll, um beispielsweise eine erste Information über die sich im Objekt befindenden Anordnungen zu erhalten. In diesem besonderen Anwendungsfall, sollte der Abstand A dann unterhalb der Höhe des Objekts liegen, damit ein Zerdrücken des Objekts durch die beiden Platten erzielt werden kann.

Ein Vorteil der vorliegenden Halterung liegt darin, dass die Objektträger und Abdeckplatten nach ihrer Verwendung wieder aus den Schienen entfernt und gegebenenfalls gereinigt werden können und die Schienen anschließend wieder zur Aufnahme von neuen oder gereinigten Objektträgern/Abdeckplatten verwendet werden können.

Neben den beiden Schienen kann die Halterung in einer vorteilhaften Ausführung wenigstens eine Verschlussschiene, in einer besonders vorteilhaften Ausführung zwei Verschlussschienen, umfassen. Diese können dazu eingesetzt werden, den Spalt, der sich zwischen Objektträger und Abdeckplatte befindet nach außen hin komplett zu verschließen.

Die erfindungsgemäße Verschlussschiene, weist eine schienenartige Erhebung auf, die sich lateral entlang der Verschlussschiene erstreckt. Diese Erhebung weist eine Dicke D auf, die dem Abstand A der Aussparungen der beiden Schienen entspricht und den Spalt C seitlich der beiden Schienen, der sich zwischen Objektträger und Abdeckplatte befindet, komplett abdeckt und verschließt.

Die Breite B der Erhebung der Verschlussschienen entspricht dabei jeweils der Breite, die sich vom jeweiligen Austritt des Objektträgers bzw. der Abdeckplatte aus der einen Schiene bis zum Eintritt des Objektträgers bzw. der Abdeckplatte in die gegenüberliegende andere Schiene erstreckt.

Durch den Einsatz von zwei Verschlussschienen kann der Spalt zwischen Objektträger und Abdeckplatte dann komplett umseitig verschlossen werden, indem die Verschlussschienen jeweils in den Spalt zwischen Objektträger und Abdeckplatte eingesetzt werden und so den Zwischenraum komplett nach außen hin abdichten, so dass vorteilhaft kein Medium, welches das Objekt umgibt, aus der Halterung austreten kann. Vorteilhaft können die Verschlussschienen hierzu Abdichtmittel umfassen. Diese können beispielsweise in Form von Gummidichtungen ausgestaltet sein, die um die Erhebung der Verschlussschiene angeordnet sind. So entsteht ein geschlossener Reaktionsraum um das zu untersuchende Objekt herum. Dieser geschlossene Reaktionsraum ermöglicht es, während der mikroskopischen Untersuchungen gleichzeitig eine Veränderung der Umgebungsbedingungen im Reaktionsraum einzustellen und die Reaktion des Objekts auf diese Veränderungen mikroskopisch zu erfassen. So kann beispielsweise ein Strom mit Hilfe von angelegten Elektroden an den Reaktionsraum angelegt werden. Weiterhin ist auch eine Temperierung des Reaktionsraums möglich, durch Anschluss einer Kühl- und/oder Heizeinheit an die Verschlussschienen. Ebenfalls möglich wird auch das Durchleiten von Reaktionslösungen, wie beispielsweise Salzlösungen, Farbstofflösungen, durch den Reaktionsraum hindurch, die dann über die erste Verschlussschiene ein und über die zweite Verschlussschiene wieder herausgeführt werden können. Die Verschlussschienen können beispielsweise je nach Anwendung aus einem metallisch leitenden oder einem Kunststoffmaterial, Keramik, gummiartigen Materialien, Kunstwachsen oder Silikonen gefertigt sein.

Es ist weiterhin möglich, dass die Schienen der Halterung mehr als zwei U-förmige Aussparungen umfassen. So ist es daher beispielsweise denkbar, dass je nach Anwendung auch mehr als ein Objektträger und eine Abdeckplatte/weiterer Objektträger in die Halterung eingesetzt werden, so beispielsweise 4 bis 8 Objektträger bzw. Abdeckplatten. Dementsprechend kann die Halterung auch mehr als zwei Verschlussschienen, nämlich beispielsweise auch 4 bis 8 Verschlussschienen umfassen.

Sowohl die erfindungsgemäßen Schienen als auch die erfindungsgemäßen Verschlussschienen können beispielsweise einfach über einen handelsüblichen 3D-Drucker hergestellt werden. Zur Herstellung der Schienen und/oder der Verschlussschienen können dabei alle für 3D-Drucker geeigneten handelsüblichen Materialien verwendet werden, wie beispielsweise Kunststoffe, insbesondere, aber nicht darauf beschränkt, Polylactide, Polyhydroxyfettsäuren, Acrylnitril-Butadien-Styrole, ligninbasierte Biopolymere, mit Kohlenstoff verstärkte Verbundwerkstoffe auf Polyamid-Basis, thermoplastische Polyurethane, Polyamide, Polypropylene, Epoxidharze oder auch Metalle, Keramik, gummiartige Materialien, Kunstwachse oder Silikone.

### Spezieller Beschreibungsteil

### Bezugszeichenliste:

- 1:: Objektträger
- 2:: Abdeckplatte
- 3:: Objekt
- 4:: Schiene
- 5a:: Aussparung für Objektträger
- 5b:: Aussparung für Abdeckplatte
- 6:: Verschlussschiene
- 7:: Erhebung der Verschlussschiene 6
- 8:: Zwischenraum bzw. Spalt zwischen Objektträger 1 und Abdeckplatte 2
- H1:: Höhe der Aussparung 5a
- H2:: Höhe der Aussparung 5b
- D:: Dicke der Erhebung 7
- B:: Breite der Erhebung 7
- A:: Abstand der Aussparungen 5a und 5b voneinander
- T:: Tiefe der Aussparungen 5a bzw. 5b

Die Figuren zeigen schematisch beispielhaft eine von vielen möglichen Ausführungsformen der erfindungsgemäßen Halterung.

Es zeigt:
Fig. 1: seitlicher Querschnitt der erfindungsgemäßen Halterung
Fig. 2: erfindungsgemäße Verschlussschiene

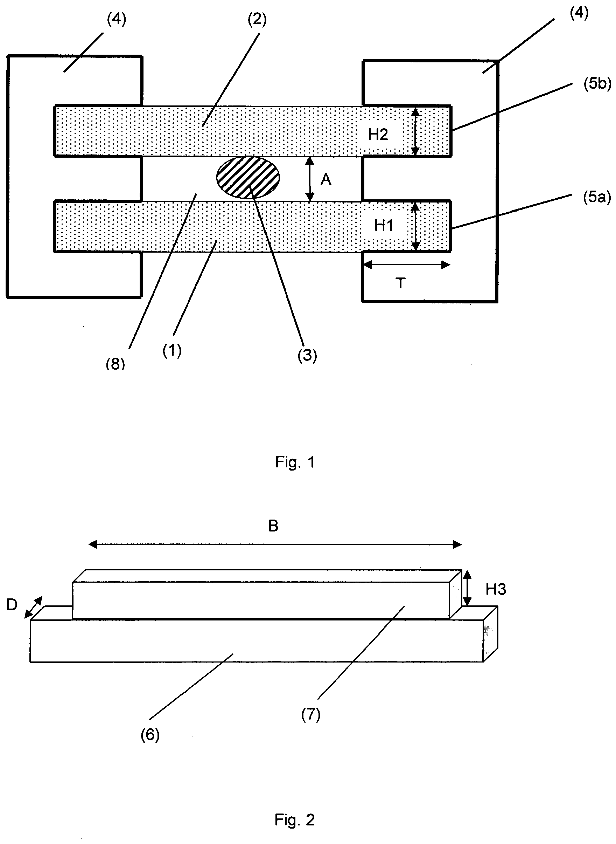

Figur 1 zeigt einen seitlichen Querschnitt der Halterung mit einem Objektträger (1) und einer Abdeckplatte (2), zwischen denen ein Objekt (3), welches mikroskopisch untersucht werden soll, angeordnet ist. Der Objektträger (1) und die Abdeckplatte (2) sind übereinander, zwischen den beiden Schienen (4) angeordnet und befinden sich jeweils mit einer Seitenkante ihrer Objektträgerplatte/Abdeckplatte innerhalb der jeweiligen Aussparung (5a, 5b) wobei sich jeweils rechts und links von dem Objektträger (1) bzw. von der Abdeckplatte (2) eine Schiene (4) befindet, so dass sich die Schienen (4) gegenüberliegen. Die Aussparungen (5a, 5b) weisen eine Höhe H1 und H2 auf, die der jeweiligen Dicke/Stärke des Objektträgers (1) bzw. der Abdeckplatte (2) entspricht. Die Aussparungen (5a, 5b) sind voneinander mit einem Abstand A beabstandet. Dieser entspricht vorzugsweise mindestens der Höhe des jeweils zu untersuchenden Objekts (3) kann aber auch über diese Höhe hinausgehen oder auch diese unterschreiten. Je nach gewünschter Anwendung kann der Abstand A unterschiedlich sein. Die Aussparungen (5a, 5b) weisen eine Tiefe T auf, die angibt, wie weit die Aussparungen (5a, 5b) in die Schiene (4) hineinragt und damit auch festlegt, wie tief der Objektträger (1) und die Abdeckplatte (4) in der Schiene (4) angeordnet und befestigt sind.

Figur 2 zeigt eine erfindungsgemäße Verschlussschiene (6), die eine schienenartige Erhebung (7) aufweist, die sich lateral entlang der Verschlussschiene (6) erstreckt und diese Erhebung (7) eine Dicke D aufweist, die dem Abstand A der Aussparungen (5a, 5b) der beiden Schienen (4) entspricht und den Spalt C seitlich der beiden Schienen (4), der sich zwischen Objektträger (1) und Abdeckplatte (2) befindet, komplett abdeckt.

Die Breite B der Erhebung (7) der Verschlussschienen (6) entspricht dabei jeweils der Breite, die sich vom jeweiligen Austritt des Objektträgers (1) bzw. der Abdeckplatte (2) aus der einen Schiene (4) bis zum Eintritt des Objektträgers (1) bzw. der Abdeckplatte (2) in die gegenüberliegende andere Schiene (4) erstreckt.

## Patentansprüche

1. Halterung für wenigstens einen Objektträger (1) und eine Abdeckplatte (2) zur Aufnahme von Objekten (3) für die Untersuchung mit Hilfe der Mikroskopie, umfassend wenigstens zwei Schienen (4) zur Aufnahme jeweils wenigstens eines Objektträgers (1) und jeweils wenigstens einer Abdeckplatte (2), wobei jede der beiden Schienen (4) wenigstens zwei übereinander angeordnete Aussparungen (5a, 5b) mit jeweils einem U-förmigen Querschnitt aufweist, in die jeweils der Objektträger (1) und darüber die Abdeckplatte (2) hineingeschoben werden, und sich die Aussparungen (5a, 5b) lateral entlang der Längsseite der jeweiligen Schiene (4) erstrecken, wobei jeweils eine Aussparung (5a) der beiden Schienen (4) eine Höhe H1 aufweist, die der Dicke des jeweils aufzunehmenden Objektträgers (1) entspricht und jeweils eine Aussparung (5b) der beiden Schienen (4) eine Höhe H2 aufweist, die der Dicke der jeweils aufzunehmenden Abdeckplatte (2) entspricht, wobei die zwei Aussparungen (5a, 5b) der Schienen (4) einen Abstand A zueinander aufweisen, der wenigstens der Höhe des aufzunehmenden Objekts (3) entspricht.

2. Halterung nach vorhergehendem Anspruch,
**dadurch gekennzeichnet,**
**dass** der Abstand A der Aussparungen (5a, 5b) der beiden Schienen (4) mindestens eine Höhe von ≥ 0,8 mm aufweist.

3. Halterung nach einem der vorhergehenden Ansprüche,
**dadurch gekennzeichnet,**
**dass** sie wenigstens eine Verschlussschiene (6) aufweist, die eine schienenartige Erhebung (7) aufweist, die sich lateral entlang der Verschlussschiene (6) erstreckt und diese Erhebung eine Dicke D aufweist, die dem Abstand A der Aussparungen (5a, 5b) der beiden Schienen (4) entspricht und den Spalt, der sich zwischen Objektträger (1) und Abdeckplatte (2) befindet seitlich der beiden Schienen (4) komplett abdeckt.

4. Halterung nach einem der vorhergehenden Ansprüche,
**dadurch gekennzeichnet,**
**dass** die Breite B der Erhebung (7) der Verschlussschienen (6) der Breite entspricht, die sich vom jeweiligen Austritt des Objektträgers (1) bzw. der Abdeckplatte (2) aus der einen Schiene (4) bis zum Eintritt des Objektträgers (1) bzw. der Abdeckplatte (2) in die gegenüberliegende andere Schiene (4) erstreckt.

5. Halterung nach einem der vorhergehenden Ansprüche,
**dadurch gekennzeichnet,**
**dass** sie wenigstens zwei Verschlussschienen (6) aufweist.

6. Halterung nach einem der vorhergehenden Ansprüche,
**dadurch gekennzeichnet,**
**dass** die Schienen (4) und/oder Verschlussschienen (6) aus Kunststoff, Metall, Keramik, gummiartigen Materialien, Kunstwachsen und/oder Silikonen hergestellt sind.

## Claims

1. A bracket for at least one object holder (1) and a cover plate (2) for receiving objects (3) for the examination by means of microscopy, comprising at least two rails (4) for receiving respectively at least one object holder (1) and respectively at least one cover plate (2), wherein each of the two rails (4) has at least two recesses (5a, 5b) which are arranged one above the other and each have an U-shaped cross section, into which recesses respectively the object holder (1) and above it the cover plate (2) are being inserted, and the recesses (5a, 5b) extend laterally along the longitudinal side of the respective rail (4), wherein respectively one recess (5a) of the two rails (4) has a height H1 which corresponds to the thickness of the respective object holder (1) to be received and respectively one recess (5b) of the two rails (4) has a height H2 which corresponds to the thickness of the respective cover plate (2) to be received, wherein the two recesses (5a, 5b) of the rails (4) have a distance A relative to each other, which corresponds to at least the height of the object (3) to be received.

2. A bracket according to the preceding claim,
**characterised in**
**that** the distance A of the recesses (5a, 5b) of the two rails (4) has at least one height of ≥ 0.8 mm.

3. A bracket according to any one of the preceding claims,
**characterised in**
**that** it has at least one closure rail (6) having a rail-like elevation (7) extending laterally along the closure rail (6) and this elevation has a thickness D which corresponds to the distance A of the recesses (5a, 5b) of the two rails (4) and completely covers the gap located between object holder (1) and cover plate (2) on the side of the two rails (4).

4. A bracket according to any one of the preceding claims,
**characterised in**
**that** the width B of the elevation (7) of the closure rails (6) corresponds to the width that extends from the respective exit of the object holder (1) and the cover plate (2), respectively, from the one rail (4) to the entry of the object holder (1) and the cover plate (2), respectively, into the opposite other rail (4).

5. A bracket according to any one of the preceding claims, **characterized in that** it has at least two closure rails (6).

6. A bracket according to any one of the preceding claims,
**characterised in**
**that** the rails (4) and/or closure rails (6) are made of plastic, metal, ceramics, rubber-like materials, artificial waxes and/or silicones.

## Revendications

1. Dispositif de retenue d'au moins un porte-objet (1) et d'une plaque (2) de couverture pour la réception d'objets (3) à étudier à l'aide de la microscopie,
comprenant au moins deux rails (4) de réception respectivement d'au moins un porte-objet (1) et de respectivement au moins une plaque (2) de couverture, dans lequel chacun des deux rails (4) a au moins deux évidements (5a, 5b) disposés l'un au dessus de l'autre et ayant chacun une section transversale en forme de U, dans lesquels respectivement le porte-objet (1) et au-dessus la plaque (2) de couverture sont glissés, et les évidements (5a, 5b) s'étendent latéralement le long du côté longitudinal du rail (4) respectif, dans lequel respectivement un évidement (5a) des deux rails (4) a une hauteur H1, qui correspond à l'épaisseur du porte-objet (1) respectif à recevoir, et respectivement un évidement (5b) des deux rails (4) a une hauteur H2, qui correspond à l'épaisseur de la plaque (2) de recouvrement respective à recevoir, dans lequel les deux évidements (5a, 5b) des rails (4) sont à une distance A l'un de l'autre, qui correspond au moins à la hauteur de l'objet (3) à recevoir.

2. Dispositif de retenue suivant la revendication précédente, **caractérisé en ce que** la distance A entre les évidements (5a, 5b) des deux rails (4) a au moins une hauteur ≥ 0,8 mm.

3. Dispositif de retenue suivant l'une des revendications précédentes, **caractérisé en ce qu'**il a au moins un rail (6) de fermeture, qui a une surélévation (7) de type en rail,
qui s'étend latéralement le long du rail (6) de fermeture et cette surélévation a une épaisseur D, qui correspond à la distance A entre les évidements (5a, 5b) des deux rails (4) et l'intervalle, qui se trouve entre le porte-objet (1) et la plaque (2) de couverture, recouvre complètement latéralement les deux rails (4).

4. Dispositif de retenue suivant l'une des revendications précédentes, **caractérisé en ce que** la largeur B de la surélévation (7) des rails (6) de fermeture correspond à la largeur, qui s'étend de la sortie respective du porte-objet (1) ou de la plaque (2) de couverture d'un rail (4) à l'entrée du porte-objet (1) ou de la plaque (2) de couverture dans l'autre rail (4) opposé.

5. Dispositif de retenue suivant l'une des revendications précédentes, **caractérisé en ce qu'**il a au moins deux rails (6) de fermeture.

6. Dispositif de retenue suivant l'une des revendications précédentes, **caractérisé en ce que** les rails (4) et/ou les rails (6) de fermeture sont en matière plastique, en métal, en céramique, en matériau de type gomme, en cires artificielles et/ou en silicones.
